Europäisches Patentamt

European Patent Office

Office européen des brevets

(11) Veröffentlichungsnummer: **0 391 229**
**A2**

(12) **EUROPÄISCHE PATENTANMELDUNG**

(21) Anmeldenummer: 90105885.9

(22) Anmeldetag: 28.03.90

(51) Int. Cl.⁵: **H04Q 1/448**

(30) Priorität: 01.04.89 DE 3910620

(43) Veröffentlichungstag der Anmeldung:
**10.10.90 Patentblatt 90/41**

(84) Benannte Vertragsstaaten:
**AT BE ES FR GB NL**

(71) Anmelder: **Gennrich, Bernd**
**Schlüsbeker Weg 19**
**D-2300 Kiel 14(DE)**

(72) Erfinder: **Janas, Gernot**
**Fasanenweg 28**
**D-2303 Gettorf(DE)**
Erfinder: **Gennrich, Bernd**
**Schluesbeker Weg 19**
**D-2300 Keil 19(DE)**

(54) Schaltungsanordnung zum Erkennen einer Signalfrequenz.

(57) Die Erfindung bezieht sich auf eine Schaltungsanordnung zum Erkennen einer Signalfrequenz innerhalb des Frequenzbandes eines zu untersuchenden Eingangssignals. In der Schaltungsanordnung
wird das zugeführt Eingangssignal in ein frequenzgleiches Rechtecksignal gewandelt, welches danach
in einer Auswerteschaltung durch Unterscheidung
der Periodendauern ausgewertet wird.

EP 0 391 229 A2

## Schaltungsanordnung zum Erkennen einer Signalfrequenz

Die Erfindung bezieht sich auf eine Schaltungsanordnung zum Erkennen einer Signalfrequenz innerhalb eines vorgewählten Frequenzbandes, wobei der Pegelbereich des zu erkennenden Signals in sehr weiten Grenzen varrierbar ist.

Schaltungsanordnungen dieser Art bieten die Möglichkeit, das Vorhandensein einer Signalfrequenz innerhalb eines bestimmten Frequenzbandes zu erkennen, wobei das zu erkennende Signal zusätzlich beachtlichen Pegelschwankungen unterworfen sein kann. Ein solcher Fall existiert z.B. bei Telekommunikationssystemen, wo der Freiton und der Besetztton nach FTZ 18R1 mit einem Maximalpegel von -4dBm und einem Minimalpegel von -4 7dBm ankommen kann. Das bedeutet, daß Pegelschwankungen von dieser Größenordnung keine negativen Auswirkungen auf eine darauf ansprechende Erkennungsschaltung haben dürfen aber handelsübliche mit integrierten Schaltkreisen aufgebaute Erkennungsschaltungen sind lediglich in der Lage Eingangssignale bis zu ca. -35dBm zu verarbeiten.

Der Erfindung liegt daher die Aufgabe zugrunde, eine in weiten Pegelgrenzen schwankende Signalfrequenz im Signalgemisch eines Frequenzbandes zu erkennen, wobei die Pegelschwankungen der Signalfrequenz keinen Einfluß auf die Auswertung haben dürfen.

Diese Aufgabe ist gemäß der Erfindung dadurch gelöst, daß das Eingangssignal über einen Bandpaß einem Pegeldetektor zur Erzeugung einer frequenzgleichen pegelunabhängigen Impulsfolge zugeleitet ist, die in einer nachfolgenden Auswerteschaltung durch Unterscheidung der Periodendauern mit nachtriggerbaren monostabilen Kippstufen ausgewertet wird.

Die erfindungsgemäße Maßnahme hat den Vorteil, daß durch die Umwandlung des zu untersuchenden Eingangssignals in ein frequenzgleiches Rechtecksignal konstanter Amplitude der Pegel des Eingangssignals ohne Einfluß auf die nachfolgende Frequenzauswertung ist. Gegenüber bekannten Schaltungsanordnungen, bei denen ein zunehmender Signalpegel eine Verbreiterung des Frequenzbandes zur Folge hat, bedeutet dies eine erhebliche Steigerung der Empfindlichkeit. Die im Pegeldetektor vorgesehene Schaltschwelle bietet dabei die Möglichkeit die minimale Ansprechschwelle und damit die Empfindlichkeit der Schaltung einzustellen.

Die Auswerteschaltung kann aus zwei nachtriggerbaren in Reihe liegenden monostabilen Kippstufen bestehen, deren Zeiglieder über eine Rückführung vom Schaltungsausgang derart beeinflußbar sind, daß beim Erkennen einer Signalfrequenz innerhalb der vorgegebenen Frequenzgrenzen die obere und die untere Frequenzgrenze um einen bestimmten Abstand erhöht bzw. abgesenkt wird. Hierdurch wird ein sonst in der Nähe der Frequenzgrenzen auftretendes instabiles Verhalten der Schaltung, und zwar durch Erzeugung einer Frequenzhysterese, vermieden.

Weitere vorteilhafte Ausgestaltungen sind den Ansprüchen 4 bis 6 zu entnehmen.

Die Erfindung wird anhand der beigefügten Zeichnung erläutert. Es zeigen:

Fig. 1 ein Blockschaltbild für eine Erkennungsschaltung,

Fig. 2 ein Diagramm eines Frequenzbandes nach dem Stand der Technik und

Fig. 3 ein Diagramm gemäß Fig. 2 mit einer erfindungsgemäßen Schaltung.

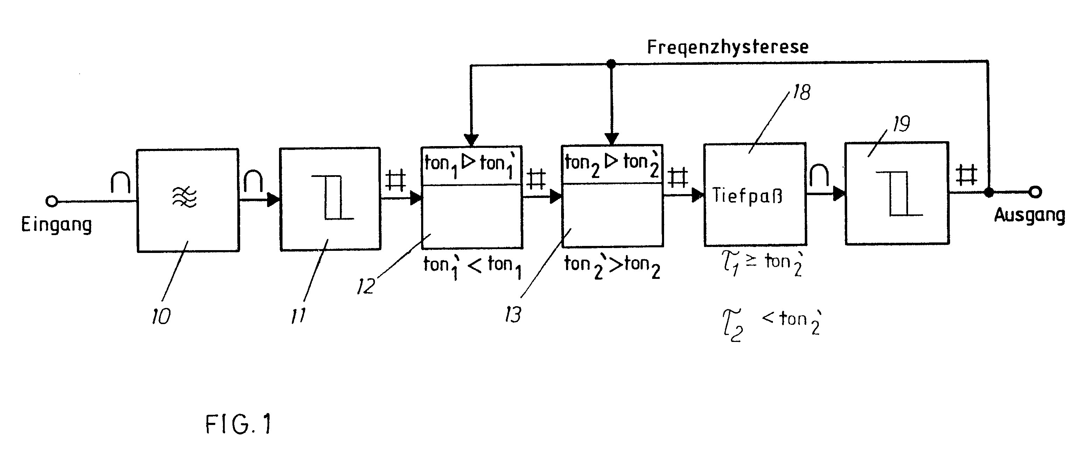

Wie die Darstellung nach Fig. 1 zeigt, wird ein nach einer bestimmten Signalfrequenz zu untersuchendes Eingangssignal über einen Bandpaß 10 auf einen Pegeldetektor 11 geschaltet, dessen Eingangsschwelle den minimalen Ansprechpegel der Erkennungsschaltung bestimmt. Der Pegeldetektor 11 formt alle Signale, welche die Eingangsschwelle überschreiten, in Rechtecksignale konstanter Amplitude um. Durch Veränderung der Eingangsschwelle ist es daher möglich, den minimalen Ansprechpegel der Erkennungsschaltung und damit die Empfindlichkeit einzustellen, während der vorgeschaltete Bandpaß Brumm-Rausch- und sonstige Störsignale auf einen unterhalb der Eingangsschwelle liegenden Pegel dämpft. Zwei dem Pegeldetektor 11 in Reihe nachgeschaltete nachtriggerbare monostabile Kippstufen 12, 13 vergleichen die Periodendauer der zugeführten Rechtecksignale mit ihren eigenen Zeitgliedern, welche z.B. mit RC-Gliedern realisierbar sind. Beide monostabilen Kippstufen 12,13 werden durch jeweils eine Flanke des zugeführten Impulssignals getriggert, wobei an der ersten Kippstufe 12 die obere Grenzfrequenz, d.h. die minimale Periodendauer und an der zweiten Kippstufe 13 die untere Grenzfrequenz bzw. die maximale Periodendauer einstellbar ist. Das Ausgangssignal der zweiten Kippstufe wird dann einem Zeitglied 18,19 zugeführt, welches dafür sorgt, daß nur Eingangssignale, die größer $t_{on2}'$ sind, zu einem Ausgangssignal führen. Dieses Zeitglied 18,19, welches beispielsweise ein Tiefpaß mit nachgeschaltetem Schmitt-Trigger sein kann, besitzt eine Einschaltzeitkonstante $\tau_1$ welche $\geq t_{on2}'$ ist und eine Ausschaltzeitkonstante $\tau_2$ die $< t_{on2}'$ ist. Der Ausgang dieses Zeitgliedes 18,19 bildet den Schaltungsausgang und von diesem Schaltungsausgang besteht eine Rückführung zu den Zeitgliedern der monostabilen Kippstufen 12, 13.

Beim Betrieb der vorgeschlagenen Erkennungsschaltung können sich in Abhängigkeit der Frequenz des zugeführten und in ein Rechtecksignal gewandelten Eingangssignals folgende Betriebszustände ergeben:

Die Impulsfolgefrequenz liegt oberhalb der oberen Grenzfrequenz, d.h. $t_s < t_{on1}'$. Bei einem derartigen Eingangssignal wird die monostabile Kippstufe 12 laufend nachgetriggert, so daß am Ausgang dieser Kippstufe ein statisches Ausgangssignal erscheint. Diese Ausgangssignal wirkt nur beim ersten Auslösevorgang auf die zweite monostabile Kippstufe 13, so daß diese nur einmal über ihr Zeitglied reagiert, sonst aber ständig kein Ausgangssignal (low) an ihrem Ausgang erzeugt. Die nachfolgenden Stufen werden daher nicht weiter angesteuert.

Wenn die Impulsfolgefrequenz unterhalb der unteren Grenzfrequenz liegt d.h. $t_s > t_{on2}'$ dann wird die monostabile Kippstufe 12 jeweils nach Ablauf ihrer Zeitkonstante $t_{on1}'$ getriggert, so daß diese Kippstufe an ihrem Ausgang eine Impulsfolge mit der Frequenz der zugeführten Impulsfolge erzeugt. Diese Impulsfolge triggert die zweite Kippstufe, welche jeweils nach Ablauf ihrer Zeitkonstante $t_{on2}'$ das Zeitglied 18,19 ansteuert. Da die Ausgangssignale der zweiten Kippstufe definitionsgemäß kleiner/gleich $\tau_1$ des Zeitgliedes sind, erscheint kein Ausgangssignale. Ein des Frequenzbandes liegendes Signal kann daher nicht gemeldet werden.

Liegt dagegen die Impulsfolgefrequenz innerhalb des zu erkennenden Frequenzbereiches, d.h. $t_{on1}' < t_s < t_{on2}'$, dann wird jeweils nach Ablauf der Zeit $t_{on1}'$ die monostabile Kippstufe 12 getriggert und an ihrem Ausgang erscheint eine Impulsfolge gleicher Frequenz. Diese Impulsfolge triggert die zweite monostabile Kippstufe 13 jeweils vor Ablauf ihrer Zeitkonstante $t_{on2}'$, so daß an ihrem Ausgang ein Dauersignal erscheint. Dieses Dauersignal wird dem Eingang des Zeitgliedes 18,19 zugeführt, welches dafür sorgt, daß erst nach der Verzögerung $\tau_1$ an seinem Ausgang ein Dauersignal erscheint. Das Zeitglied 18,19 meldet daher mit seinem Ausgangssignal das Vorhandensein einer Signalfrequenz innerhalb der Frequenzgrenzen.

Vom Ausgang des den Schaltungsausgang bildenden Schmitt-Triggers 19 besteht zu den Zeitgliedern der monostabilen Kippstufen 12,13 eine Rückführung, welche beim Erkennen einer gültigen Signalfrequenz eine Verschiebung der oberen und der unteren Grenzfrequenz um einen bestimmten Abstand nach oben bzw. nach unten bewirkt. Hierdurch wird ein sonst in der Nähe der Frequenzgrenzen auftretendes instabiles Verhalten der Schaltung durch eine Frequenzhysterese vermieden.

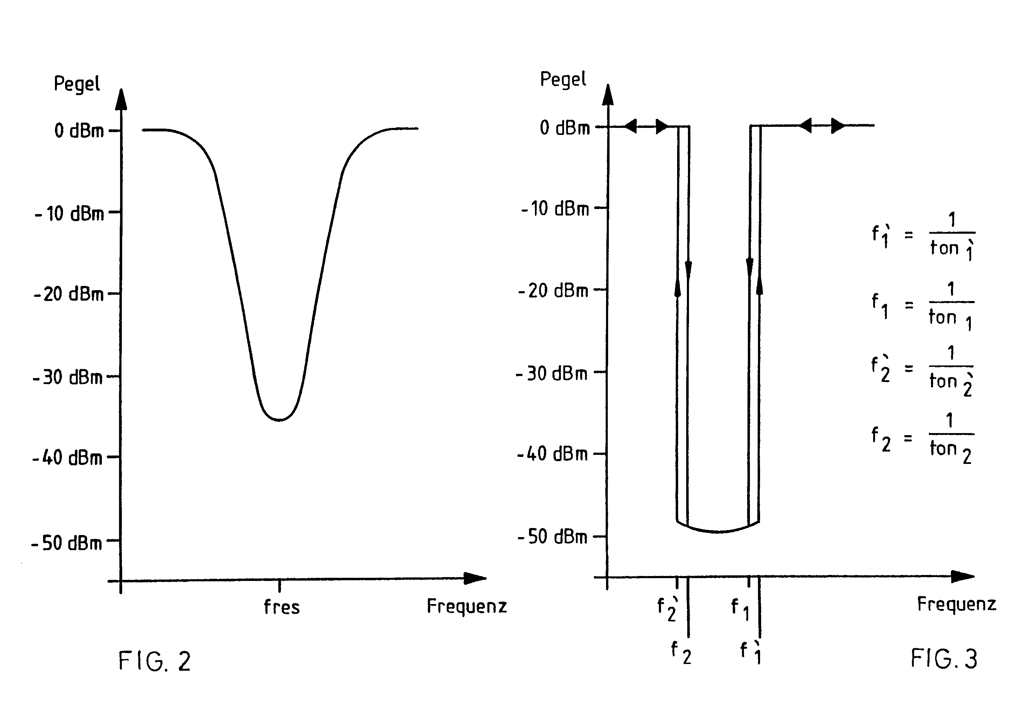

Die Schaltung hat den Vorteil, daß durch die Umwandlung des Eingangssignals in ein frequenzgleiches Rechtecksignal konstanter Amplitude der Pegel des Eingangssignals keine Einfluß mehr auf die nachfolgende Frequenzauswertung hat. Gegenüber herkömmlichen Schaltungen, bei denen das zu untersuchende Frequenzband gemäß Fig. 2 mit zunehmenden Pegel breiter wird, ist das mit einer erfindungsgemäßen Schaltung erzielbare Frequenzband, gemäß Fig. 3 unabhängig vom Pegel des Eingangssignals. Dadurch ist es auch möglich, die Empfindlichkeit einer solchen Erkennungsschaltung beträchtlich zu erhöhen und Signale mit einer Dynamik größer 50 dB zu verarbeiten.

Beim Einsatz der Erfindung als Hörtonempfänger in einem Telekommunikationssystem bedeutet dies,daß der Freiton und der Besetzton eines Amtes, die nach der FTZ-Richtlinie 18R1 mit einem Maximalpegel von -4dBm und einem minimalen Pegel von -47dBm ankommen können, von der Schaltung empfangen und unterschieden werden können. Da handelsübliche integrierte Schaltkreise derartige Dynamikbereiche nicht besitzen, ergibt sich durch den Einsatz dieser Erfindung ein beachtlicher Vorteil. Die monostabilen Kippstufen können dabei auch durch digital arbeitende quarzgesteuerte Kippstufen ersetzt werden, womit dann die Toleranzen in den Ablaufzeiten der Kippstufen und den Zeitgliedern minimiert werden und somit die Erkennungsbandbreite sehr viel kleiner und genauer sein kann als bei analogen Kippstufen.

## Ansprüche

1. Schaltungsanordnung zum Erkennen einer Signalfrequenz innerhalb eines vorgewählten Frequenzbandes, wobei der Pegelbereich des zu erkennenden Signals in sehr weiten Grenzen variierbar ist, dadurch gekennzeichnet, daß das Eingangssignal über einen Bandpaß (10) einem Pegeldetektor (11) zur Erzeugung einer frequenzgleichen pegelunabhängigen Impulsfolge zugeleitet ist, die in einer nachfolgenden Auswerteschaltung durch Unterscheidung der Periodendauern mit nachtriggerbaren monostabilen Kippstufen ausgewertet wird.

2. Schaltungsanordnung nach Anspruch 1, dadurch gekennzeichnet, daß der Pegeldetektor (11) eine einstellbare Schaltschwelle aufweist, zum Einstellen des minimalen in der Auswerteschaltung auswertbaren Signalpegels.

3. Schaltungsanordnung nach Anspruch 1 oder 2, dadurch gekennzeichnet, daß die Auswerteschaltung zwei nachtriggerbare monostabile in Reihe liegende Kippstufen (12,13) aufweist, deren die Grenzfrequenzen bestimmenden Zeitglieder über eine Rückführung vom Schaltungsausgang derart beeinflußbar sind, daß dem Erkennen einer Signalfrequenz innerhalb der vorgegebenen Frequenzgrenzen die obere und die untere Frequenzgrenze um einen bestimmten Abstand erhöht bzw. abgesenkt werden.

4. Schaltungsanordnung nach einem der Ansprüche 1 bis 3, dadurch gekennzeichnet, daß den zwei in Reihe liegenden monostabilen Kippstufen (12,13) ein Zeitglied aus einem Tiefpaß (18) und ein mit seinem Ausgang den Schaltungsausgang bildender Schmitt-Trigger (19) nachgeschaltet ist.

5. Schaltungsanordnung nach Anspruch 4, dadurch gekennzeichnet, daß das Zeitglied (18,19) eine Einschaltzeitkonstante ($\tau_1$) und eine Ausschaltzeitkonstante ($\tau_2$) besitzt, wobei $\tau_1 \geqq \text{ton2}'$ und $\tau_2 < t_{on2}'$ des von der monostabilen Kippstufe (13) zugeführten Signals ist.

6. Schaltungsanordnung nach einem der vorhergehenden Ansprüche, dadurch gekennzeichnet, daß die monostabilen Kippstufen durch digital arbeitende quarzgesteuerte Kippstufen ersetzt sind.

FIG. 1

Freqenzhysterese

Eingang

Ausgang

$ton_1 \triangleright ton_1'$

$ton_1' < ton_1$

$ton_2 \triangleright ton_2'$

$ton_2' > ton_2$

Tiefpaß

$T_1 \geqq ton_2'$

$T_2 < ton_2'$

Tiefpaß

10  11  12  13  18  19

EP 0 391 229 A2

FIG. 2

$$f_1^{'} = \frac{1}{t_{on\,1}^{'}}$$

$$f_1 = \frac{1}{t_{on\,1}}$$

$$f_2^{'} = \frac{1}{t_{on\,2}^{'}}$$

$$f_2 = \frac{1}{t_{on\,2}}$$

FIG. 3

EP 0 391 229 A2